# EUROPÄISCHE PATENTSCHRIFT

(11) **EP 2 193 013 B1**
(45) Veröffentlichungstag und Bekanntmachung des Hinweises auf die Patenterteilung: **13.11.2013**
(21) Anmeldenummer: 08802698.4
(22) Anmeldetag: 29.09.2008
(51) Int. Cl.: B29C 33/46, B29C 45/43, B29K 83/00

(54) **VERFAHREN UND VORRICHTUNG ZUM HERSTELLEN EINES FORMKÖRPERS**
METHOD AND DEVICE FOR PRODUCING A MOULDING
PROCÉDÉ ET DISPOSITIF DE PRODUCTION D'UN CORPS MOULÉ

(30) Priorität: 27.09.2007 DE 102007046379
(43) Veröffentlichungstag der Anmeldung: 09.06.2010
(73) Patentinhaber: Novatex Gmbh, 30982 Pattensen (DE)
(72) Erfinder: STRUCKMEIER, Armin, 30982 Pattensen (DE)
(74) Vertreter: Leinweber & Zimmermann
(86) Internationale Anmeldenummer: PCT/EP2008/008266
(87) Internationale Veröffentlichungsnummer: WO 2009/043567

(56) Entgegenhaltungen:
- WO-A-2006/037249
- "NEW MOULD DESIGN FOR THIN-WALL PACKS" PLASTICS AND RUBBER INTERNATIONAL, PLASTICS AND RUBBER INSTITUTE. LONDON, GB, Bd. 9, Nr. 2, 1. April 1984 (1984-04-01), Seite 9, XP001176495

## Beschreibung

Die Erfindung betrifft ein Verfahren zum Bilden eines einen nach außen offenen Hohlraum aufweisenden Formkörpers, insbesondere eines Saugers, bei dem ein Formmantel an einen Formkern angelegt wird, der sich mit einem ersten Kernabschnitt in einem Abstand von der Innenseite des angelegten Formmantels und mit einem an den ersten Kernabschnitt angrenzenden zweiten Kernabschnitt dicht anliegend durch den angelegten Formmantel hindurch erstreckt, der zwischen dem Formkern und dem angelegten Formmantel begrenzte Formhohlraum mit einer Formmasse befüllt wird, der Formmantel nach dem Härten des aus der Formmasse auf dem Formkern gebildeten Formkörpers, an dessen Öffnung der erste und der zweite Kernabschnitt aneinander grenzen, entfernt wird, und ein Flächenbereich des Formkörpers, der eine eine zu der Grenze zwischen dem ersten und dem zweiten Kernabschnitt orthogonale Richtungskomponente aufweisende Flächennormale aufweist, mit einem Druckfluid beaufschlagt und dadurch der Formkörper von dem Formkern abgelöst wird, mit den weiteren Merkmalen des Oberbegriffs von Anspruch 1, sowie eine dazu geeignete Vorrichtung.

Bei den mit derartigen Verfahren herzustellenden Formkörpern handelt es sich beispielsweise um ein Saugteil, das einen Bestandteil eines Beruhigungssaugers bildet, oder um einen Flaschensauger für Säuglinge oder Kleinkinder. Diese sind üblicherweise aus einem Material wie Latex oder Silikon gebildet, wozu ein Verfahren der eingangs genannten Art, etwa ein Spritzgußverfahren, eingesetzt werden kann.

Das herkömmliche Ablösen des gebildeten Formkörpers von dem Formkern wird dabei mittels Druckluft durchgeführt, indem eine Blasnadel derart in den Formkern eingefahren wird, daß durch die Blasnadel zugeführte Druckluft in den Hohlraum des Formkörpers gelangt und auf einen Bereich seiner inneren Oberfläche auftrifft. Durch den dabei auf den Formkörper einwirkenden Druckimpuls wird der Formkörper von dem Formkern abgestoßen. Insbesondere bei Formkörpern, deren Formkern im ersten Kernabschnitt zur Ablöserichtung orthogonale Querschnitte aufweist, die größer als der zur Ablöserichtung orthogonale Querschnitt der Öffnung des Formkörpers sind, müssen durch die Druckluft erhebliche Ablösekräfte aufgebracht werden, weil sich der Formkörper bei seiner Ablösung elastisch verformen muß, damit seine Öffnung über die ihr gegenüber dickeren Bereiche des Formkerns hinweggelangen kann.

Wenn jedoch der Hohlraum eine gegenüber der Ablöserichtung abgewinkelte oder gekrümmte Längsachse aufweist, wie bei dem in DE 197 31 532 C1 offenbarten Kindernuckel, wird es schwierig oder gar unmöglich, die geradlinige Blasnadel zum Zwecke der Ablösung vom Formkern in den Hohlraum einzuführen.

WO 2006/037249 und XP-001176495 offenbaren jeweils den Einsatz von Druckluft beim Formablösen von Formkörpern.

XP-001176495 offenbart ein Verfahren gemäß dem Oberbegriff des Anspruchs 1 und eine Vorrichtung gemäß dem Oberbegriff des Anspruchs 14.

Der Erfindung liegt daher die Aufgabe zugrunde, ein Verfahren der eingangs genannten Art derart weiterzubilden, daß es auch für die Herstellung und Ablösung von Formkörpern geeignet ist, deren Formhohlraum für Blasnadeln nur schwer oder überhaupt nicht zugänglich ist.

In verfahrensmäßiger Hinsicht wird die Aufgabe durch die kennzeichnenden Merkmale von Anspruch 1 gelöst. daß der von dem Druckfluid beaufschlagte Flächenbereich ein Bereich der äußeren Oberfläche des Formkörpers ist. Dabei liegt der Erfindung zum einen die Erkenntnis zugrunde, daß es zur Ablösung des Formkörpers vom Formkern ausreicht, wenn das Druckfluid, vorzugsweise Druckluft, von außen auf den Formkörper trifft, obwohl sich dabei kein statischer Druck zwischen dem Formkern und dem Hohlraum ausbilden kann. Die Ablösung ist auf diese Weise auch dann noch möglich, wenn der Hohlraum des Formkörpers, wie bei den oben erwähnten Saugern, keine geradlinige Längsachse und gegenüber dem Offnungsquerschnitt größere Querschnitte im Hohlraum aufweist. Zum Anderen wird eine geeignete Angriffsfläche für das Druckfluid bereitgestellt.

Insbesondere ist es auch von Vorteil, daß keine beweglichen Blasnadeln erforderlich sind, die für den Ablösevorgang in den Hohlraum eingefahren werden müssen.

Zweckmäßig wird das Druckfluid dem Flächenbereich in einer eine zu dessen Flächennormale parallele Strömungskomponente aufweisenden Strömungsrichtung zugeführt. Für diese Strömungsführung sind keine beweglichen Bauteile in einer für das Verfahren ausgelegten Vorrichtung vonnöten.

Nach einer vorteilhaften Verfahrensgestaltung legt das Druckfluid vor dem Auftreffen auf den Flächenbereich der äußeren Oberfläche einen freien Strömungsweg zurück. Der freie Strömungsweg kann dabei durch einen Bereich verlaufen, der bei Formung des Formkörpers von dem Formmantel in dessen angelegtem Zustand eingenommen wird, jedoch nach dessen Entfernung vom Formkern freiliegt.

Besonders vorteilhaft weist das Druckfluid beim Auftreffen auf den Flächenbereich der äußeren Oberfläche eine Strömungskomponente in der Ablöserichtung des Formkörpers auf. Letztere ist im wesentlichen orthogonal zum Öffnungsquerschnitt des Hohlraums gerichtet und entspricht bei einem Sauger dessen Längsrichtung.

Erfindungsgemäß ist der von dem Druckfluid beaufschlagte Flächenbereich ein sich nahe der Öffnung des Formkörpers erstreckender Oberflächenbereich des Formkörpers.

Besonders zweckmäßig begrenzt der Oberflächenbereich einen Flansch des Formkörpers. So wird zum einen eine ausreichend große Angriffsfläche für die Druckluft bereitgestellt, zum anderen ist der Flansch beispielsweise bei einem Sauger für dessen Verbindung mit einer Saugplatte eines Beruhigungssaugers oder einer Trinkflasche geeignet.

Weiterhin ist es zweckmäßig, daß sich der Oberflächenbereich orthogonal zu einem daran angrenzenden Bereich der inneren Oberfläche des Hohlraums erstreckt. So kann die in Ablöserichtung wirkende Impulskomponente des Druckfluids eine maximale Wirkung zum Ablösen entfalten.

Im Rahmen der Erfindung kann auch vorgesehen sein, daß das Druckfluid eine zu dem Oberflächenbereich parallele und in Richtung auf die Öffnung des Hohlraums verlaufende Strömungskomponente aufweist. Dadurch wirkt ein Teilstrom des Druckfluids auf den Bereich zwischen Hohlraum und Formkern ein, sobald sich ein minimaler Spalt zwischen dem Formkörper und dem Formkern gebildet hat, und begünstigt dadurch den Ablösevorgang. Dies ist insbesondere bei dem unten beschriebenen zweistufigen Abblasverfahren von Vorteil.

Zweckmäßig erfolgt die Beaufschlagung mit dem Druckfluid in Form eines oder mehrerer Druckfluidimpulse. So kann eine hohe, stoßartige Ablösekraft erreicht werden.

In diesem Zusammenhang ist vorgesehen, daß die Dauer eines Druckfluidimpulses im Bereich von 5 bis 200 ms, bevorzugt 10 bis 100 ms, insbesondere 20 bis 50 ms liegt. Mit diesen Zeitbereichen wird ein zuverlässiges Ablösen des Formkörpers erreicht.

Hinsichtlich des Drucks der Druckfluidimpulse ist vorgesehen, daß dieser im Bereich von 4 bis 40 bar, bevorzugt 8 bis 24 bar, insbesondere 16 bis 20 bar, liegt. In diesem Bereich ist ein zuverlässiges Ablösen des Formkörpers ohne Beschädigung desselben erreichbar.

Nach einer möglichen Verfahrensgestaltung ist vorgesehen, daß das Druckfluid in zwei aufeinanderfolgenden Druckfluidimpulsen zugeführt wird, wobei der Druck des ersten Impulses geringer als der des zweiten Impulses ist und/oder die Dauer des ersten Impulses geringer als die des zweiten Impulses ist. Dieses zweistufige Abblasverfahren mit Vorblasdruck und Abblasdruck wird insbesondere bei kleineren Formkörpern vorteilhaft eingesetzt.

Hinsichtlich des Materials der Formmasse wird bevorzugt Silikon oder Latex verwendet. Für diese Materialien läßt sich das Verfahren besonders wirkungsvoll durchführen, und diese sind auch für Sauger geeignete Materialien.

In vorrichtungsmäßiger Hinsicht wird die Aufgabe durch eine Vorrichtung zum Herstellen eines einen nach außen offenen Hohlraum aufweisenden Formkörpers gelöst, die insbesondere zur Durchführung eines Verfahrens mit den oben erläuterten Merkmalen ausgelegt ist, mit einem einen ersten Kernabschnitt und einen zweiten Kernabschnitt aufweisenden Formkern und einem zwischen einer an den Formkern angelegten Stellung und einer davon zurückgezogenen Stellung verstellbaren Formmantel, in dessen angelegter Stellung sich der erste Kernabschnitt in einem Abstand von der Innenseite des Formmantels und der zweite Kernabschnitt dicht anliegend durch den angelegten Formmantel hindurch erstreckt und dadurch einen Formhohlraum zwischen dem Formkern und dem angelegten Formmantel begrenzt und in dessen zurückgezogener Stellung der Formkern freiliegt, einer Einrichtung zum Befüllen des Formhohlraums mit einer Formmasse, einer Einrichtung, durch die der Formmantel vor dem Befüllen des Formhohlraums in seine an den Formkern angelegte Stellung und nach dem Härten des aus der Formmasse auf dem Formkern gebildeten Formkörpers, an dessen Öffnung der erste und der zweite Kernabschnitt aneinandergrenzen, in seine von dem Formkern zurückgezogene Stellung verstellbar ist, und einer Einrichtung, durch die ein Flächenbereich des Formkörpers, der eine zu der Grenze zwischen dem ersten und dem zweiten Kernabschnitt orthogonale Richtungskomponente aufweisende Flächennormale aufweist, mit einem Druckfluid beaufschlagbar und dadurch der Formkörper von dem Formkern ablösbar ist, wobei die Vorrichtung erfindungsgemäß dadurch gekennzeichnet ist, daß das Druckfluid auf einen den zu beaufschlagende Flächenbereich bildenden Bereich der äußeren Oberfläche des Formkörpers gerichtet ist, und mit den weiteren Merkmalen von Anspruch 14.

Die Vorteile der erfindungsgemäßen Vorrichtung ergeben sich aus den oben erläuterten Vorteilen des erfindungsgemäßen Verfahrens.

In einer vorteilhaften Ausführungsform sind in einem außerhalb des Formmantels gelegenen Bereich des zweiten Kernabschnitts ein oder mehrere Fluidkanäle zur Führung des Druckfluids ausgebildet. So kann das Druckfluid in wirkungsvoller Weise auf den Formkörper zu dessen Ablösung vom Formkern auftreffen.

In einer anderen vorteilhaften Ausführungsform sind zwei Fluidkanäle unter gegenseitigem Abstand symmetrisch zu einer zur Grenze zwischen dem ersten Kernabschnitt und dem zweiten Kernabschnitt orthogonalen Mittellinie angeordnet. Dies bewirkt eine symmetrische Beaufschlagung des Formkörpers und begünstigt den Ablösevorgang.

Schließlich sind in einer zweckmäßigen. Ausführungsform die Fluidkanäle ausgangsseitig gegen die Flächennormale in Richtung auf den Formkern geneigt. Dadurch trifft das Druckfluid mit einer zu der Öffnung des Hohlraums hin gerichteten Strömungskomponente auf den Flächenbereich auf.

Von der Erfindung erfaßt sind auch Sauger für Kleinkinder und/oder Säuglinge, insbesondere mit abgewinkeltem Transmitterbereich, die nach einem oben erläuterten erfindungsgemäßen Verfahren oder mittels einer erfindungsgemäßen Vorrichtung hergestellt sind.

Weitere Vorteile und Einzelheiten der Erfindung ergeben sich aus der genaueren Erläuterung bevorzugter Verfahrensgestaltungen und Ausführungsformen unter Bezugnahme auf die beiliegenden Zeichnungen, von denen
- Fig. 1: einen Sauger im Querschnitt zeigt, der nach einem erfindungsgemäßen Verfahren mit einer erfindungsgemäßen Vorrichtung hergestellt werden kann,
- Fig. 2: eine Überblicksdarstellung einer Vorrichtung zum Bilden des in Fig. 1 gezeigten Saugers zeigt,
- Fig. 3: einen Schnitt durch die in Fig. 2 gezeigte Vorrichtung in einer ersten Stellung zeigt, in der ein Formmantel an einen Formkern angelegt ist,
- Fig. 4: einen vergrößerten Ausschnitt eines für die Erfindung relevanten Bereichs aus Fig. 3 zeigt, und
- Fig. 5: eine der Fig. 4 entsprechende Ansicht zeigt, in der sich der Formmantel in einer zweiten Stellung befindet, in der er von dem Formkern zurückgezogen ist.

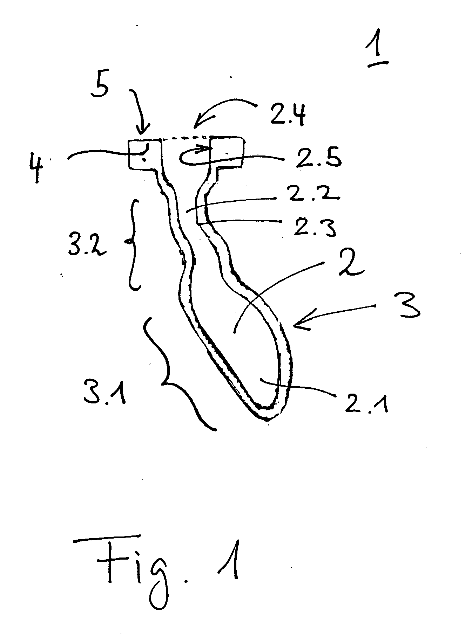

Fig. 1 zeigt einen nach einem erfindungsgemäßen Verfahren mit einer erfindungsgemäßen Vorrichtung herstellbaren Formkörper, nämlich einen Sauger 1 für Kleinkinder und/oder Säuglinge. Der Sauger 1 hat einen Hohlraum 2, der an einer in Fig. 1 oberen Öffnung 2.4 nach außen offen ist. In seiner Form entspricht der Sauger 1 dem in DE 197 31 532 C1 offenbarten Kindernuckel. Dessen äußere Oberfläche 3 bildet an einem der Öffnung 2.4 entgegengesetzten vorderen Bereich 3.1 des Saugers 1 die Außenseite eines Lutschkörpers, an den sich ein Transmitterbereich 3.2 anschließt, an dessen an die Öffnung 2.4 angrenzenden anderem Ende ein von einem Flächenbereich 4 der äußeren Oberflächen 3 begrenzter Flansch ausgebildet ist. Entsprechend der äußeren Oberfläche hat auch der Hohlraum 2 einen vorderen Bereich 2.1 sowie einen Mittenbereich (Transmitterbereich) 2.2.

In dem Transmitterbereich 2.2 ist ein in Fig. 1 mit 2.3 bezeichneter Knick oder eine Krümmung vorgesehen, die dafür sorgt, daß bei den den Sauger 1 benutzenden Säuglingen bzw. Kleinkindern die Ausbildung einer regelgerechten sagittalen Frontzahnstufe ermöglicht wird, wie genauer in DE 197 31 532 C1 erläutert ist. Dieser Knick 2.3 stellt jedoch ein Hindernis für das Einführen von Blasnadeln in den Hohlraum 2 zum Zwecke des Ablösens von einem zu dem Hohlraum 2 komplementär ausgebildeten Formkern einer zur Bildung des Saugers 1 verwendeten Form dar.

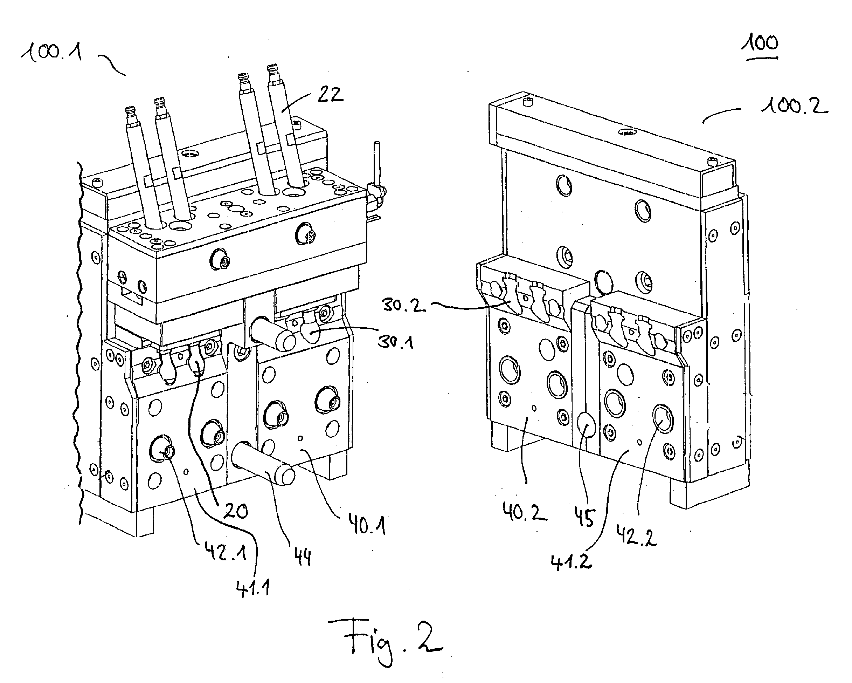

Von dem die ebene, stirnseitige Endfläche 5 des Flansches bildenden Flächenbereich 4 aus erstreckt sich ein die Öffnung 2.4 begrenzender Flächenbereich 2.5 der inneren Oberfläche des Hohlraums 2 in Richtung auf den Mittenbereich 2.2. Der die Stirnseite 5 bildende Flächenbereich 4 wird in der nachstehend zu erörternden Weise beim Ablösen des Formkörpers 1 von einem zu seiner Herstellung verwendeten Formkern 20 (Fig. 2 bis 5) mit Druckluft beaufschlagt. Dieser Flächenbereich 4 erstreckt sich im wesentlichen orthogonal zu dem inneren Flächenbereich 2.5 des Hohlraums 2 sowie im wesentlichen parallel zum Querschnitt der Öffnung 2.4 und weist somit eine zum Querschnitt der Öffnung 2.4 orthogonale Flächennormale auf.

Fig. 2 zeigt zwei wesentliche Teile 100.1, 100.2 einer erfindungsgemäßen Vorrichtung 100, die zur Herstellung des in Fig. 1 gezeigten Saugers geeignet ist. Dabei sind die beiden Teile 100. und 100.2 in perspektivischer Darstellung mit Sicht auf ihre Innenseiten gezeigt, die jedoch beim Betrieb der Vorrichtung 100 einander parallel zugewandt sind sowie zwischen einer ersten Stellung, in der sie dicht aneinanderliegen, und einer zweiten Stellung, in der sie einen gegenseitigen Abstand einnehmen, verstellbar sind.

An den Innenseiten der Teile 100.1 und 100.2 sind zwei Paare von Formplatten 40.1, 40.2 bzw. 41.1, 41.2 angeordnet, in denen jeweils zwei Formhälften eines äußeren Formmantels ausgebildet sind. Mit diesen Formplatten 40 lassen sich daher bis zu vier Sauger gleichzeitig herstellen. Die beiden Formhälften eines der insgesamt vier Formmäntel sind in den Fig. 2, 4 und 5 mit den Bezugszeichen 30.1 und 30.2 bezeichnet. Für den Formvorgang werden die Formplatten 40.1, 40.2 bzw. 41.1, 41.2 in ihre erste Stellung versetzt, in der sie aneinander anliegen. Dabei wird das in Fig. 2 rechte Vorrichtungsteil 100.2 mit Führungslöchern 45 auf Führungsbolzen 44 des Teils 100.1 der Vorrichtung 100 geführt. Durch zueinander komplementäre Zentrierelemente 42.1, 42.2 wird sichergestellt, daß dabei die Formschalenhälften 30.1, 30.2 zur Bildung eines geschlossenen Formmantels relativ zueinander genau positioniert werden.

Die aus den jeweils zwei Formhälften 30.1, 30.2 zusammengesetzten Formmäntel bestimmen bei der Bildung des Saugers dessen äußere Oberfläche 3. Die innere Oberfläche des Saugers, d. h. die innere Oberfläche des Hohlraums 2, wird dagegen von einem Formkern 20 bestimmt, der in den Formmantel hineinragt. In Fig. 2 sind nur zwei dieser Formkerne 20 vor den jeweils dahinterliegenden Formhälften des Formmantels eingezeichnet.

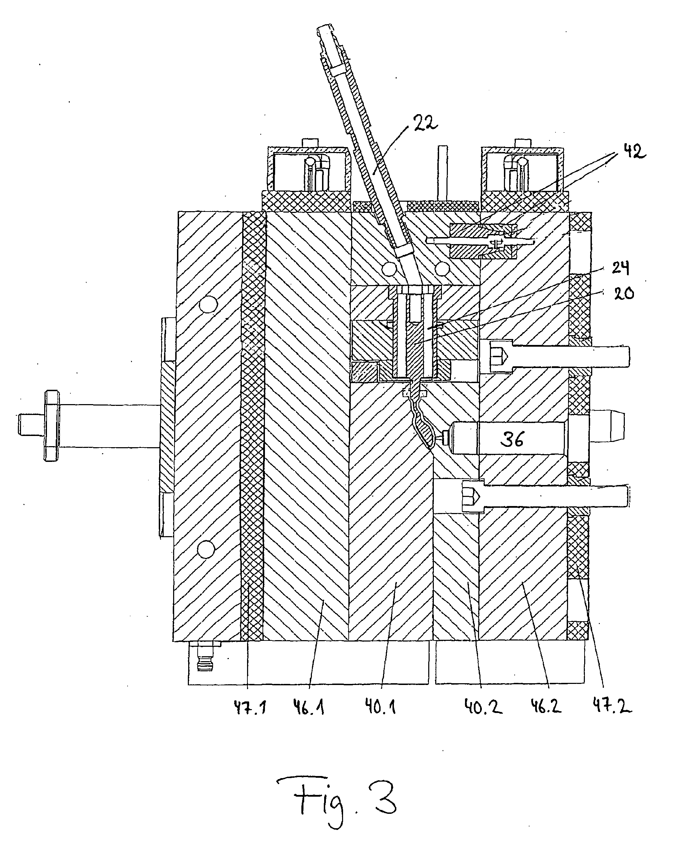

Am besten ist die Lage des Formkerns 20 innerhalb des Formmantels und ein dazwischen begrenzter Formhohlraum 23 in den Fig. 3 bis 5 erkennbar. Aus diesen Figuren ist ersichtlich, daß der Formkern 20 einen ersten Kernabschnitt 20.1 aufweist, der sich in einem Abstand von dem an den Formkern 20 angelegten Formmantel 30.1, 30.2 erstreckt und dadurch die innere Begrenzungsfläche des Formhohlraums 23 bildet. An diesen ersten Kernabschnitt schließt sich ein zweiter Kernabschnitt 20.2 an, der an dem Formmantel 30.1, 30.2 dicht anliegt und aus diesem nach außen hin herausragt. Die Grenze zwischen dem ersten Kernabschnitt 20.1 und dem zweiten Kernabschnitt 20.2 fluchtet also mit dem der Stirnseite 5 des Formkörpers 1 entsprechenden Flächenbereich 5' des Formmantels 30.1, 30.2 und damit auch mit der von dem Durchtritt des Formkerns 20 durch diesen Flächenbereich 5' bestimmten Querschnittsfläche der Öffnung 2.4 des Formkörpers 1.

An den aus dem Formmantel 30.1, 30.2 herausragenden Bereich des zweiten Kernabschnitts 20.2 schließt sich ein dritter Kernabschnitt 20.3 an, der sich symmetrisch zu einer zum Querschnitt der Öffnung 2.4 orthogonalen Mittellinie erstreckt. In diesem dritten Kernabschnitt sind symmetrisch zu der genannten Mittellinie unter einem dazu orthogonalen gegenseitigen Abstand zwei Luftkanäle 24 ausgebildet, die an ihren zu dem ersten Kernabschnitt 20.1 weisenden offenen Enden an einer bezüglich der Mittellinie radialen Schulter des dritten Kernabschnitts 20.3 frei ausmünden. An ihren dazu entgegengesetzten Enden sind diese Luftkanäle 24 jeweils an in den Fig. 2 und 3 eingezeichnete Druckluftzuführungen 22 angeschlossen.

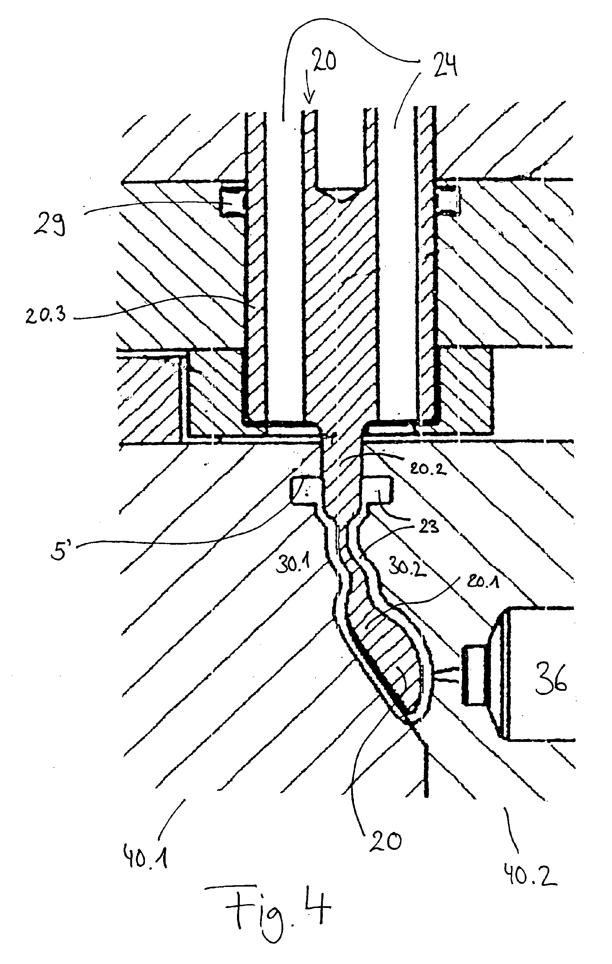

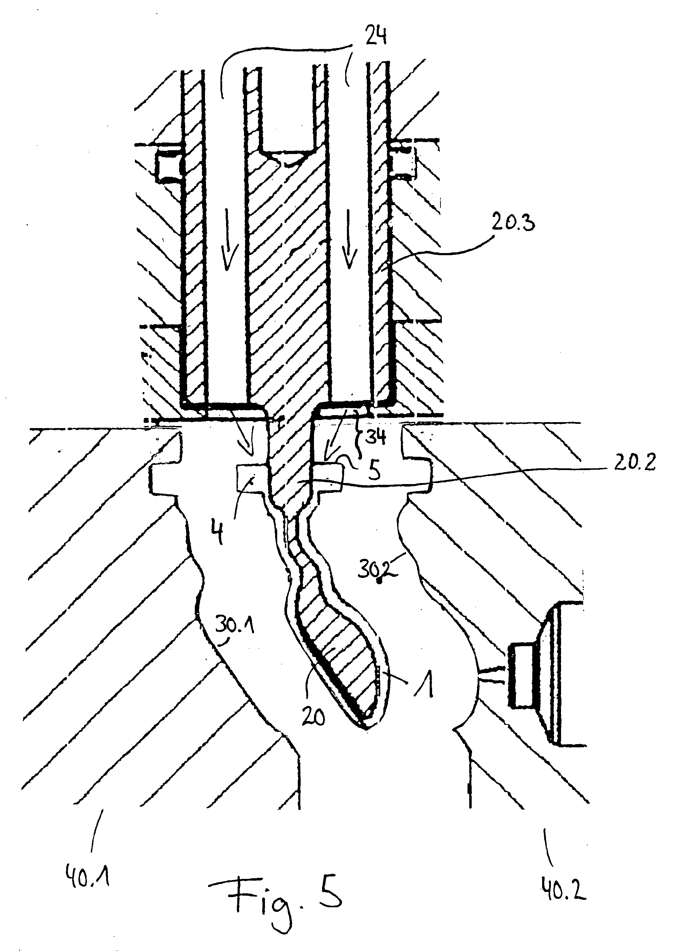

Für die Herstellung der Formkörper 1 werden zunächst die Teile 100.1, 100.2 mit den Formplatten 40.1, 40.2 in die in den Fig. 3 und 4 dargestellte erste Stellung versetzt, in welcher der Formmantel 30.1, 30.2 an den Formkern 20 angelegt ist. Sodann wird der dadurch gebildete Formhohlraum 23 mittels einer Befüllungseinrichtung 36 mit einer Formmasse, beispielsweise Latex oder Silikon, befüllt, die durch Wärmeeinwirkung erhärtet. Letztere wird von in Fig. 3 schematisch dargestellten Heizplatten 46.1, 46.2 aufgebracht, die auf ihren den Formplatten 40.1, 40.2 abgewandten Seiten durch Isolierplatten 47.1, 47.2 gegen Wärmeverluste geschützt sind. Nach der Bildung des Formkörpers 1 aus der erhärteten Formmasse werden die beiden Teile 100:1, 100.2 in die in Fig. 5 dargestellte zweite Stellung versetzt, in der die beiden Formhälften 30.1, 30.2 des Formmantels von dem Formkern 20 und dem darauf gebildeten Formkörper 1 zurückgezogen sind.

Die vorstehend beschriebenen Vorgänge des Anlegens des Formmantels, des Befüllens des Formhohlraums und des Öffnens des Formmantels nach Bildung des Formkörpers entsprechen dem Verfahrensablauf herkömmlicher Spritzgießverfahren, die dem Fachmann wohlbekannt sind.

Wenn sich die den Formmantel bildenden Formhälften 30.1, 30.2 in der in Fig. 5 dargestellten zurückgezogenen Stellung befinden, wird der Formkörper 1 durch Druckluftbeaufschlagung von dem Formkern 20 abgelöst. Hierzu werden die Luftkanäle 24 von ihrer Druckluftzurührung 22 stoßweise mit Druckluft beschickt. Diese strömt der zur Mittelachse parallelen Richtung der Luftkanäle folgend und über den zwischen der radialen Schulter des dritten Kernabschnitts 20.3 und der Stirnseite 5 des Formkörpers 1 liegenden freien Strömungsweg 34, wie durch die in Fig. 5 eingezeichneten Strömungspfeile angedeutet, gegen den die Stirnseite 5 begrenzenden Flächenbereich 4. Die hierdurch auf diesen Flächenbereich 4 übertragene Kraft reicht aus, den Formkörper 1 von dem Formkern 20 abzublasen. Hierzu ist es lediglich erforderlich, daß mindestens eine Komponente einer Flächennormalen des beaufschlagten Flächenbereichs 4 und mindestens eine Komponente der Druckluftströmung zueinander antiparallel gerichtet sind. Es ist jedoch günstig, wenn die Druckluftströmung, wie in Fig. 5 dargestellt, auch eine auf den aus dem Formkörper 1 herausragenden Bereich des zweiten Kernabschnitts 20.2 gerichtete Richtungskomponente aufweist, weil hierdurch Luft zwischen den Formkörper 1 und den Formkern 20 eindringen und dadurch den Ablösevorgang erleichtern kann.

Das erfindungsgemäße Verfahren ist bereits durch die vorangegangene Beschreibung der Vorrichtung 100 und ihrer Funktion anhand der Figuren insbesondere 3 bis 5 hinreichend erläutert. Zusätzlich sind im folgenden noch zwei konkrete Beispiele zur Durchführung des Abblasens angegeben.

### Beispiel 1

Die Form 20, 30.1, 30.2 ist auf einen Sauger der Größe 1 (Kindesalter üblicherweise 0 bis 3 bzw. bis 4 Monate) ausgelegt. Als Material wird entweder Silikon oder Latex verwendet. Nach der oben beschriebenen Bildung des Saugers 1 der Größe 1 wird das Abblasen in zwei Stufen durchgeführt. Zunächst erfolgt in einer Vorblasstufe ein Druckimpuls mit Stärke 9 bis 10 bar für einen Zeitraum von 20 ms. Durch den Vorblasdruckstoß löst sich bereits die Verbindung zwischen Sauger 1 und Formkern 20 um den Flanschbereich 4, so daß bereits ein winziger Spalt zwischen der Innenwand des Flanschbereichs 4 und dem Formkern 20 gebildet wird.

Unmittelbar danach erfolgt mit Abblasdruck von etwa 16 bar in einer zweiten Stufe ein Abblasdruckluftimpuls von etwa 50 ms. Dieser bläst den Sauger 1 vollständig von dem Formkern 20 ab, wobei die Druckluft begünstigt von ihrer parallel zur Stirnseite 5 verlaufenden Impulskomponente bereits teilweise in den Spalt zwischen der Innenwand des Flanschbereichs 4 und dem Formkern 20, also den Hohlraum 2 des Saugers 1, eindringen kann, was das Abblasen erleichtert.

### Beispiel 2

Es wird ein Sauger der Größe 2 (ab 3 bzw. 4 Monaten) hergestellt, wozu die Form 20, 30.1, 30.2 größenmäßig entsprechend ausgelegt ist. Das Material kann wiederum Latex oder Silikon sein. Durch die entsprechend größere Auslegung u. a. des Transmitterbereichs 2.2, 3.2 des Saugers 1 ist dieser Bereich verglichen mit dem Sauger der Größe 1 etwas weniger steif bzw. elastischer, so daß das Abblasen einstufig erfolgen kann. Dazu wird mit einem Druckluftimpuls von 50 ms mit 18 bis 20 bar abgeblasen.

### Bezugszeichenliste

- 1: Formkörper (Sauger)
- 2: Hohlraum
- 2.1: vorderer Bereich
- 2.2: Mittenbereich (Transmitterbereich)
- 2.3: Knick
- 2.4: Öffnung
- 2.5: Flächenbereich
- 3: äußere Oberfläche
- 3.1: vorderer Bereich
- 3.2: Transmitterbereich
- 4: Flächenbereich
- 5: Stirnseite
- 5': Flächenbereich
- 18: Kernbalken
- 20: Formkern
- 20.1: erster Kernabschnitt
- 20.2: zweiter Kernabschnitt
- 20.3: dritter Kernabschnitt
- 22: Druckluftzuführung
- 23: Formhohlraum
- 24: Luftkanal
- 30.1, 30.2: Formhälften
- 34: freie Blasstrecke
- 36: Eingabe/Einspritzvorrichtung
- 40.1, 40.2: Paar von Formplatten
- 41.1, 41.2: Paar von Formplatten
- 42.1, 42.2: Zentrierelemente
- 44: Führungsbolzen
- 45: Führungsloch
- 46.1, 46.2: Heizplatten
- 47.1, 47.2: Isolierplatten
- 100: Vorrichtung
- 100.1, 100.2: Teile der Vorrichtung

## Patentansprüche

1. Verfahren zum Herstellen eines einen nach außen offenen Hohlraum (2) aufweisenden Formkörpers (1), insbesondere eines Saugers, bei dem
ein Formmantel (30.1, 30.2) an einen Formkern (20) angelegt wird, der sich mit einem ersten Kernabschnitt (20.1) in einem Abstand von der Innenseite des angelegten Formmantels (30.1, 30.2) und mit einem an den ersten Kernabschnitt (20.1) angrenzenden zweiten Kernabschnitt (20.2) dicht anliegend durch den angelegten Formmantel (30.1, 30.2) hindurch erstreckt,
der zwischen dem Formkern (20) und dem angelegten Formmantel (30.1, 30.2) begrenzte Formhohlraum (23) mit einer Formmasse befüllt wird,
der Formmantel (30.1, 30.2) nach dem Härten des aus der Formmasse auf dem Formkern (20) gebildeten Formkörpers (1), an dessen Öffnung (2.4) der erste (20.1) und der zweite (20.2) Kernabschnitt aneinandergrenzen, entfernt wird, und
ein sich nahe der Öffnung (2.4) des Formkörpers (1) quer zu einem daran angrenzenden Bereich (2.5) der inneren Oberfläche des Hohlraums (2) erstreckender äußerer Oberflächenbereich (5) des Formkörpers (1), der eine eine zu der Grenze zwischen dem ersten (20.1) und dem zweiten (20.2) Kernabschnitt orthogonale Richtungskomponente aufweisende Flächennormale aufweist, mit einem Druckfluid beaufschlagt und dadurch der Formkörper (1) von dem Formkern (20) abgelöst wird,
**dadurch gekennzeichnet, daß** der von dem Druckfluid beaufschlagte äußere Oberflächenbereich (5) bei der Bildung des Formkörpers (1) von einem ihm entsprechenden Flächenbereich (5') des Formmantels (30.1, 30.2) bestimmt wird und vor dem Beginn des Ablösens des Formkörpers (1) durch die Entfernung des Formmantels (30.1, 30.2) für die Beaufschlagung mit dem Druckfluid freigelegt wird.

2. Verfahren nach Anspruch 1, **dadurch gekennzeichnet, daß** das Druckfluid dem äußeren Oberflächenbereich (5) in einer eine zu dessen Flächennormale parallele Strömungskomponente aufweisenden Strömungsrichtung zugeführt wird.

3. Verfahren nach Anspruch 1 oder 2, **dadurch gekennzeichnet, daß** das Druckfluid vor dem Auftreffen auf den äußeren Oberflächenbereich (5) einen freien Strömungsweg (34) zurücklegt.

4. Verfahren nach einem der vorhergehenden Ansprüche, **dadurch gekennzeichnet, daß** das Druckfluid beim Auftreffen auf den äußeren Oberflächenbereich (5) eine Strömungskomponente in der Ablöserichtung des Formkörpers (1) aufweist.

5. Verfahren nach einem der vorhergehenden Ansprüche, **dadurch gekennzeichnet, daß** der äußere Oberflächenbereich (5) einen Flansch des Formkörpers (1) begrenzt.

6. Verfahren nach einem der vorhergehenden Ansprüche, **dadurch gekennzeichnet, daß** sich der äußere Oberflächenbereich (5) orthogonal zu dem daran angrenzenden Bereich (2.5) der inneren Oberfläche des Hohlraums (2) erstreckt.

7. Verfahren nach Anspruch 6, **dadurch gekennzeichnet, daß** das Druckfluid eine zu dem äußeren Oberflächenbereich (5) parallele und in Richtung auf die Öffnung (2.4) des Hohlraums (2) verlaufende Strömungskomponente aufweist.

8. Verfahren nach einem der vorhergehenden Ansprüche, **dadurch gekennzeichnet, daß** die Beaufschlagung mit dem Druckfluid in Form eines oder mehrerer Druckfluidimpulse erfolgt.

9. Verfahren nach Anspruch 8, **dadurch gekennzeichnet, daß** die Dauer eines Druckfluidimpulses im Bereich von 5 bis 200 ms, bevorzug 10 bis 100 ms, insbesondere 20 bis 50 ms, liegt.

10. Verfahren nach Anspruch 8 oder 9, **dadurch gekennzeichnet, daß** der Druck der Druckfluidimpulse im Bereich von 4 bis 40 bar, bevorzugt 8 bis 24 bar, insbesondere 16 bis 20 bar, liegt.

11. Verfahren nach einem der Ansprüche 8 bis 10, **dadurch gekennzeichnet, daß** das Druckfluid in zwei aufeinanderfolgenden Druckfluidimpulsen zugeführt wird, wobei der Druck des ersten Impulses geringer als der des zweiten Impulses ist und/oder die Dauer des ersten Impulses geringer als die des zweite Impulses ist.

12. Verfahren nach einem der vorhergehenden Ansprüche, **dadurch gekennzeichnet, daß** die Formmasse Silikon oder Latex aufweist oder aus einem dieser Materialien besteht.

13. Verfahren nach einem der vorhergehenden Ansprüche, **dadurch gekennzeichnet, daß** das Druckfluid Druckluft ist.

14. Vorrichtung (100) zum Herstellen eines einen nach außen offenen Hohlraum (2) aufweisenden Formkörpers (1), insbesondere zur Durchführung eines Verfahrens nach einem der vorhergehenden Ansprüche,
mit einem einen ersten Kernabschnitt (20.1) und einen zweiten Kernabschnitt aufweisenden Formkern (20) und einem zwischen einer an den Formkern angelegten Stellung und einer davon zurückgezogenen Stellung verstellbaren Formmantel (30.1, 30.2), in dessen angelegter Stellung sich der erste Kernabschnitt (20.1) in einem Abstand von der Innenseite des Formmantels (30.1, 30.2) und der zweite Kernabschnitt (20.2) dicht anliegend durch den angelegten Formmantel (30.1, 30.2) hindurch erstreckt und dadurch einen Formhohlraum (23) zwischen dem Formkern (20) und dem angelegten Formmantel (30) begrenzt und in dessen zurückgezogener Stellung der Formkern (20) freiliegt,
einer Einrichtung (36) zum Befüllen des Formhohlraums (23) mit einer Formmasse, einer Einrichtung, durch die der Formmantel (30.1, 30.2) vor dem Befüllen des Formhohlraums (23) in seine an den Formkern (20) angelegte Stellung und nach dem Härten des aus der Formmasse auf dem Formkern (20) gebildeten Formkörpers (1), an dessen Öffnung (2.4) der erste (20.1) und der zweite (20.2) Kernabschnitt aneinandergrenzen, in seine von dem Formkern zurückgezogene Stellung verstellbar ist, und
einer Einrichtung (22, 24), durch die ein sich nahe der Öffnung (2.4) des Formkörpers (1) quer zu einem daran angrenzenden Bereich (2.5) der inneren Oberfläche des Hohlraums (2) erstreckender äußerer Oberflächenbereich (5) des Formkörpers (1), der eine zu der Grenze zwischen dem ersten (20.1) und dem zweiten (20.2) Kernabschnitt orthogonale Richtungskomponente aufweisende Flächennormale aufweist, mit einem Druckfluid beaufschlagbar und dadurch der Formkörper (1) von dem Formkern (20) ablösbar ist,
**dadurch gekennzeichnet, daß** der von dem Druckfluid beaufschlagbare äußere Oberflächenbereich (5) in der angelegten Stellung des Formmantels bei Bildung des Formkörpers (1) von einem diesem entsprechenden Flächenbereich (5') des Formmantels bestimmbar ist und durch Verstellung des Formmantels in seine zurückgezogene Stellung für die Beaufschlagung mit dem Druckfluid freilegbar ist.

15. Vorrichtung nach Anspruch 14, **dadurch gekennzeichnet, daß** in einem außerhalb des Formmantels (30.1, 30.2) gelegenen Bereich des zweiten Kernabschnitts (20.2) mindestens ein Fluidkanal (24) zur Führung des Druckfluids ausgebildet ist.

16. Vorrichtung nach Anspruch 15, **dadurch gekennzeichnet, daß** zwei Fluidkanäle (24) unter gegenseitigem Abstand symmetrisch zu einer zur Grenze zwischen dem ersten Kernabschnitt (20.1) und dem zweiten Kernabschnitt (20.2) orthogonalen Mittellinie angeordnet sind.

17. Vorrichtung nach Anspruch 15 oder 16, **dadurch gekennzeichnet, daß** die Fluidkanäle (24) ausgangsseitig gegen die Flächennormale in Richtung auf den Formkern (20) geneigt sind.

## Claims

1. A method for producing a moulding (1) having an outwardly open cavity (2), in particular a sucker, in which
a mould mantle (30.1, 30.2) is placed against a mould core (20) which extends through the positioned mould mantle (30.1, 30.2) with a first core portion (20.1) a distance away from the inner side of the positioned mould mantle (30.1, 30.2) and with a second core portion (20.2) which adjoins the first core portion (20.1), right up against said mantle,
the mould cavity (23) delimited between the mould core (20) and the positioned mould mantle (30.1, 30.2) is filled with a moulding compound,
the mould mantle (30.1, 30.2) is removed after the moulding (1) formed from the moulding compound on the mould core (20) has hardened, at the opening (2.4) of which moulding (1) the first (20.1) and the second (20.2) core portions adjoin one another, and
an outer surface region (5) of the moulding (1) extending close to the opening (2.4) of the moulding (1) transversely to an adjoining region (2.5) of the inner surface of the cavity (2) and that has a surface normal comprising a directional component orthogonal to the boundary between the first (20.1) and the second (20.2) core portion is subjected to a pressurised fluid and the moulding (1) is thereby detached from the mould core (20),
**characterised in that** the outer surface region (5) subjected to the pressurised fluid is determined during the formation of the moulding (1) by a surface region (5') of the mould mantle (30.1, 30.2) corresponding to it and is exposed by removing the mould mantle (30.1, 30.2) for subjection to the pressurised fluid before starting to detach the moulding (1).

2. The method according to Claim 1, **characterised in that** the pressurised fluid is delivered to the outer surface region (5) in a flow direction having a flow component parallel to its surface normal.

3. The method according to Claim 1 or 2, **characterised in that** the pressurised fluid covers a free flow path (34) before striking the outer surface region (5).

4. The method according to any of the preceding claims, **characterised in that** the pressurised fluid has a flow component in the detaching direction of the moulding (1) upon striking the outer surface region (5).

5. The method according to any of the preceding claims, **characterised in that** the outer surface region (5) delimits a flange of the moulding (1).

6. The method according to any of the preceding claims, **characterised in that** the outer surface region (5) extends orthogonally to the adjoining region (2.5) of the inner surface of the cavity (2).

7. The method according to Claim 6, **characterised in that** the pressurised fluid has a flow component running parallel to the outer surface region (5) and towards the opening (2.4) of the cavity (2).

8. The method according to any of the preceding claims, **characterised in that** subjection to the pressurised fluid takes place in the form of one or a number of pressurised fluid pulses.

9. The method according to Claim 8, **characterised in that** the duration of a pressurised fluid pulse comes within the range of 5 to 200 ms, preferably 10 to 100 ms, particularly 20 to 50 ms.

10. The method according to Claim 8 or 9, **characterised in that** the pressure of the pressurised fluid pulses comes within the range of 4 to 40 bar, preferably 8 to 24 bar, particularly 16 to 20 bar.

11. The method according to any of Claims 8 to 10, **characterised in that** the pressurised fluid is delivered in two consecutive pressurised fluid pulses, the pressure of the first pulse being lower than that of the second pulse, and/or the duration of the first pulse being shorter than that of the second pulse.

12. The method according to any of the preceding claims, **characterised in that** the moulding compound comprises silicone or latex or is made of one of these materials.

13. The method according to any of the preceding claims, **characterised in that** the pressurised fluid is compressed air.

14. An apparatus (100) for producing a moulding (1) having an outwardly open cavity (2), in particular for implementing a method according to any of the preceding claims,
comprising a mould core (20) having a first core portion (20.1) and a second core portion (20.2), and a mould mantle (30.1, 30.2) which can be moved between a position adjoining the mould core and a position drawn back from the latter, in the adjoining position of which the first core portion (20.1), a distance away from the inside of the mould mantle (30.1, 30.2), and the second core portion (20.2), right up against said mantle, extends through the adjoining mould mantle (30.1, 30.2) and thereby delimits a mould cavity (23) between the mould core (20) and the adjoining mould mantle (30), and in the drawn back position of the latter the mould core (20) is exposed,
a device (36) for filling the mould cavity (23) with a moulding compound,
a device by means of which the mould mantle (30.1, 30.2) can be moved into its position placed against the mould core (20) before filling the mould cavity (23) and into its position pulled back from the mould core after the hardening of the moulding (1) formed from the moulding compound on the mould core (20), on the opening (2.4) of which the first (20.1) and the second (20.2) core portions adjoin one another, and
a device (22, 24) by means of which an outer surface region (5) of the moulding (1) extending close to the opening (2.4) of the moulding (1) transversely to an adjoining region (2.5) of the inner surface of the cavity (2), and which has a surface normal having a directional component orthogonal to the boundary between the first (20.1) and the second (20.2) core portion, can be subjected to a pressurised fluid and the moulding (1) can thereby be detached from the mould core (20),
**characterised in that** when forming the moulding (1) the outer surface region (5), which can be subjected to the pressurised fluid in the adjoining position of the mould mantle, can be determined by a surface region (5') of the mould mantle corresponding to said moulding and can be exposed by moving the mould mantle into its drawn back position for subjection to the pressurised fluid.

15. The apparatus according to Claim 14, **characterised in that** at least one fluid channel (24) for conveying the pressurised fluid is formed in a region of the second core portion (20.2) located outside of the mould mantle (30.1, 30.2).

16. The apparatus according to Claim 15, **characterised in that** two fluid channels (24) are arranged a reciprocal distance away symmetrically to a centre line orthogonal to the boundary between the first core portion (20.1) and the second core portion (20.2).

17. The apparatus according to Claim 15 or 16, **characterised in that** the fluid channels (24) are inclined on the output side in relation to the surface normal in the direction of the mould core (20).

## Revendications

1. Procédé de production d'un corps moulé (1) présentant un espace creux (2) ouvert vers l'extérieur, notamment d'une tétine, dans lequel
un surmoule (30.1, 30.2) est appliqué sur un noyau de moule (20) qui s'étend, par une première section de noyau (20.1), à distance du côté intérieur du surmoule (30.1, 30.2) appliqué et, par une deuxième section de noyau (20.2) adjacente à la première section de noyau (20.1), de manière jointive à travers le surmoule (30.1, 30.2) appliqué,
l'espace creux du moule (23), délimité entre le noyau de moule (20) et le surmoule (30.1, 30.2) appliqué, est rempli d'une matière moulable,
le surmoule (30.1, 30.2) est retiré après durcissement du corps moulé (1) formé par la matière moulable sur le noyau de moule (20), la première (20.1) et la deuxième (20.2) section de noyau étant adjacentes au niveau de l'ouverture (2.4) dudit corps moulé, et
une zone de surface supérieure extérieure (5) du corps moulé (1), qui s'étend à proximité de l'ouverture (2.4) du corps moulé (1) transversalement à une zone (2.5) de la surface intérieure de l'espace creux (2) qui y est adjacente, laquelle zone de surface supérieure extérieure présente une normale de surface présentant une composante directionnelle orthogonale à la limite entre la première (20.1) et la deuxième (20.2) section de noyau, est exposée à un fluide sous pression, moyennant quoi le corps moulé (1) est détaché du noyau de moule (20), **caractérisé en ce que** la zone de surface supérieure extérieure (5) exposée au fluide sous pression est définie, lors de la formation du corps moulé (1), par une zone de surface (5') du surmoule (30.1, 30.2) correspondant à celle-ci, et est libérée, avant le commencement du détachement du corps moulé (1), par l'enlèvement du surmoule (30.1, 30.2) pour l'exposition au fluide sous pression.

2. Procédé selon la revendication 1, **caractérisé en ce que** le fluide sous pression est apporté à la zone de surface supérieure extérieure (5) dans une direction d'écoulement présentant une composante d'écoulement parallèle à sa normale de surface.

3. Procédé selon la revendication 1 ou la revendication 2, **caractérisé en ce que** le fluide sous pression parcourt une voie d'écoulement libre (34) avant de frapper la zone de surface supérieure extérieure (5).

4. Procédé selon l'une des revendications précédentes, **caractérisé en ce que** le fluide sous pression présente une composante d'écoulement orientée dans la direction de détachement du corps moulé (1) lors de la frappe de la zone de surface supérieure extérieure (5).

5. Procédé selon l'une des revendications précédentes, **caractérisé en ce que** la zone de surface supérieure extérieure (5) délimite une bride du corps moulé (1).

6. Procédé selon l'une des revendications précédentes, **caractérisé en ce que** la zone de surface supérieure extérieure (5) s'étend de manière orthogonale à la zone (2.5) de la surface intérieure de l'espace creux (2) qui y est adjacente.

7. Procédé selon la revendication 6, **caractérisé en ce que** le fluide sous pression présente une composante d'écoulement parallèle à la zone de surface supérieure extérieure (5) et qui s'étend en direction de l'ouverture (2.4) de l'espace creux (2).

8. Procédé selon l'une des revendications précédentes, **caractérisé en ce que** l'exposition au fluide sous pression s'effectue sous la forme d'une ou de plusieurs impulsions de fluide sous pression.

9. Procédé selon la revendication 8, **caractérisé en ce que** la durée d'une impulsion de fluide sous pression se situe dans la plage allant de 5 à 200 ms, de préférence de 10 à 100 ms, notamment de 20 à 50 ms.

10. Procédé selon la revendication 8 ou 9, **caractérisé en ce que** la pression des impulsions de fluide sous pression se situe dans la plage allant de 4 à 40 bar, de préférence de 8 à 24 bar, notamment de 16 à 20 bar.

11. Procédé selon l'une des revendications 8 à 10, **caractérisé en ce que** le fluide sous pression est apporté sous la forme de deux impulsions successives de fluide sous pression, la pression de la première impulsion étant inférieure à celle de la deuxième impulsion et/ou la durée de la première impulsion étant inférieure à celle de la deuxième impulsion.

12. Procédé selon l'une des revendications précédentes, **caractérisé en ce que** la matière moulable présente de la silicone ou du latex ou bien consiste en l'une de ces matières.

13. Procédé selon l'une des revendications précédentes, **caractérisé en ce que** le fluide sous pression est de l'air sous pression.

14. Dispositif (100) de production d'un corps moulé (1) présentant un espace creux (2) ouvert vers l'extérieur, notamment destiné à la mise en oeuvre d'un procédé selon l'une des revendications précédentes,
comportant un noyau de moule (20) présentant une première section de noyau (20.1) et une deuxième section de noyau, et comportant un surmoule (30.1, 30.2) pouvant évoluer entre une position appliquée sur le noyau de moule et une position en retrait de celui-ci, dans la position appliquée duquel la première section de noyau (20.1) s'étend à distance du côté intérieur du surmoule (30.1, 30.2) et la deuxième section de noyau (20.2) s'étend de manière jointive à travers le surmoule (30.1, 30.2) appliqué, en délimitant ainsi un espace creux du moule (23) entre le noyau de moule (20) et le surmoule (30) appliqué, et dans la position en retrait duquel le noyau de moule (20) est libéré,
un dispositif (36) pour le remplissage de l'espace creux du moule (23) par une matière moulable,
un dispositif grâce auquel le surmoule (30.1, 30.2) peut évoluer, avant le remplissage de l'espace creux du moule (23), dans sa position appliquée sur le noyau de moule (20), et après durcissement de la matière moulable constituant le corps moulé (1) sur le noyau de moule (20) au niveau de l'ouverture (2.4) duquel la première (20.1) et la deuxième (20.2) section de noyau sont adjacentes, dans sa position en retrait par rapport au noyau de moule, et
un dispositif (22, 24) grâce auquel une zone de surface supérieure extérieure (5) du corps moulé (1), qui s'étend à proximité de l'ouverture (2.4) du corps moulé (1) transversalement à une zone (2.5) de la surface intérieure de l'espace creux (2) qui y est adjacente, laquelle zone de surface supérieure extérieure présente une normale de surface présentant une composante directionnelle orthogonale à la limite entre la première (20.1) et la deuxième (20.2) section de noyau, peut être exposée à un fluide sous pression, moyennant quoi le corps moulé (1) peut être détaché du noyau de moule (20),
**caractérisé en ce que** la zone de surface supérieure extérieure (5) exposée à l'action du fluide sous pression peut être définie, lors de la formation du corps moulé et dans la position appliquée du surmoule, par une zone de surface (5') du surmoule correspondant à celle-ci et peut être libérée par l'évolution du surmoule dans sa position en retrait permettant l'exposition au fluide sous pression.

15. Dispositif selon la revendication 14, **caractérisé en ce qu'**il est constitué, dans une zone de la deuxième section de noyau (20.2) située en dehors du surmoule (30.1, 30.2), au moins un canal fluidique (24) destiné à l'amenée du fluide sous pression.

16. Dispositif selon la revendication 15, **caractérisé en ce que** deux canaux fluidiques (24) sont disposés avec un écart mutuel symétriquement à une ligne médiane perpendiculaire servant de délimitation entre la première section de noyau (20.1) et la deuxième section de noyau (20.2).

17. Dispositif selon la revendication 15 ou la revendication 16, **caractérisé en ce que** les canaux fluidiques (24) sont inclinés, côté sortie, contre la normale de surface, en direction du noyau de moule (20).
